# EUROPÄISCHE PATENTSCHRIFT

(11) **EP 1 084 926 B1**
(45) Veröffentlichungstag und Bekanntmachung des Hinweises auf die Patenterteilung: **24.03.2004**
(21) Anmeldenummer: 00119523.9
(22) Anmeldetag: 07.09.2000
(51) Int. Cl.: B60T 17/04, F16L 3/00

(54) **Halterung für eine Druckleitung**
Supporting device for a pressure conduit
Dispositif de maintien d'un conduit sous pression

(30) Priorität: 16.09.1999 DE 19944600
(43) Veröffentlichungstag der Anmeldung: 21.03.2001
(73) Patentinhaber: FTE automotive GmbH & Co. KG, 96106 Ebern (DE)
(72) Erfinder: Capan, Iso, 96489 Niederfüllbach (DE); Macht, Egid, 81247 München (DE)
(74) Vertreter: Oppermann, Mark, Dipl.-Ing.

(56) Entgegenhaltungen:
- EP-A- 0 272 370
- EP-A- 0 666 628
- DE-A- 2 218 250
- DE-A- 2 435 995
- DE-A- 2 600 725
- DE-A- 3 004 421
- DE-U- 29 909 715
- GB-A- 2 284 005
- US-A- 4 074 491
- US-A- 4 189 807
- US-A- 4 340 244
- US-A- 5 178 479
- US-A- 5 257 768

## Beschreibung

Die vorliegende Erfindung bezieht sich auf eine Halterung für eine Druckleitung gemäß dem Oberbegriff des Patentanspruchs 1. Insbesondere bezieht sich die Erfindung auf eine Halterung, mittels der an bzw. in einem Kraftfahrzeug eine Rohr-Schlauch-Bremsleitung an einem Bremssattelgehäuse einer Scheibenbremse gehalten werden kann.

Druckleitungen mit Schlauchabschnitten werden dort eingesetzt, wo Verbindungen in einem hydraulischen Leitungssystem flexibel sein müssen. So verbindet bei beispielsweise einer Kraftfahrzeug-Bremsanlage eine Bremsleitung mit einem Schlauchabschnitt die an der Karosserie festverlegte Rohrleitung mit der sich mit der Radaufhängung bewegenden Radbremse, z.B. einem Bremssattel einer Scheibenbremse. Hierbei muß insbesondere die Verbindungsstelle zwischen Schlauchabschnitt und Radbremse hohen Anforderungen genügen. Es sind hier Drücke zu übertragen, die leicht über 100 bar liegen können, die Bremsflüssigkeit kann bei starken Bremsvorgängen sehr hohe, selbst 100°C übersteigende Temperaturen annehmen, gleichzeitig wird die Verbindungsstelle bei einem Einfedern der Radaufhängung noch mechanisch beansprucht, wobei insgesamt keine Undichtigkeiten auftreten dürfen.

Im Stand der Technik fehlt es nicht an Vorschlägen, wie diese Verbindungsstelle zwischen Schlauchabschnitt und Radbremse auszubilden ist. An beispielsweise Bremssätteln gelangen derzeit bevorzugt mehrteilige Armaturen zum Einsatz, wie sie prinzipiell aus der DE-C-30 04 421, der DE-C-35 14 315 oder der DE-A-195 44 222 bekannt sind. Zwar vermindern diese stabilen Armaturen mit ihrer massiven Ausbildung den Wärmeübergang von dem Bremssattel auf den Schlauchabschnitt der Bremsleitung, so daß dieser keine thermische Überbeanspruchung erfahren kann. Der Aufbau dieser Armaturen ist jedoch konstruktiv aufwendig. So fallen etwa bei den aus der DE-C-30 04 421 oder der DE-C-35 14 315 bekannten Ringarmaturen, bei denen ein mit dem Schlauchabschnitt verbundenes Ringteil eine Hohlschraube konzentrisch umgibt, mindestens zwei Dichtstellen mit dem Erfordernis entsprechender Oberflächenbearbeitung an der Ringarmatur und dem Bremssattelgehäuse an. Darüber hinaus sind aufwendige Maßnahmen vorgesehen, um ein Verdrehen des Ringteils der Armatur bezüglich des Bremssattelgehäuses zu verhindern. Im Ergebnis machen diese Armaturen bei dem Massenartikel Bremsleitung bereits den Hauptteil der Gestehungskosten aus.

Entsprechendes gilt für die aus der DE-C-26 00 725 bekannte Armatur, welche mittels einer aus einem Federstahlstreifen gebildeten Haltefeder festgelegt ist.

Weiterhin ist eine Ausbildung der Verbindungsstelle zwischen Schlauchabschnitt der Bremsleitung und Radbremse bekannt (DE-A-1 955 504, DE-A-42 30 889, bei der der Schlauchabschnitt mit-tels eines Verbinders mit einem gekrümmten Rohrteil verbunden ist, welches seinerseits für den Anschluß an einen Druckanschluß der Radbremse endseitig mit einer Armatur in Form einer Überwurfschraube versehen ist. Dabei weist das sich durch die Überwurfschraube erstreckende Ende des Rohrteils einen Dichtbördel auf, der bei in den Druckanschluß eingeschraubter Überwurfschraube dicht gegen einen Dichtkegel des Druckanschlusses gepreßt wird. Auch bei dieser Lösung ist der Schlauchabschnitt der Bremsleitung von der Radbremse thermisch gut entkoppelt. Erschütterungen, Stöße und Vibrationen im Betrieb des Kraftfahrzeugs sowie die Relativbewegung zwischen Radaufhängung und Karosserie beim Einfedern haben jedoch Biegebeanspruchungen am Rohrteil der Bremsleitung zur Folge, die im Dauerbetrieb dazu führen können, daß eine Leckage von Bremsflüssigkeit an der Verbindungsstelle auftritt. Auch die in der DE-A-42 30 889 vorgeschlagenen, am Gehäuse der Radbremse angeformten Blöcke, die zwischen ihren parallelen, einander zugewandten Flächen das Rohrteil der Bremsleitung aufnehmen, schaffen hier keine ausreichende Abhilfe.

Schließlich offenbart die DE-U-299 09 715 eine Halterung zum Fixieren eines Wellschlauchs. Bei einem durchgehenden Wellschlauch stellen sich die oben geschilderten mechanischen Probleme, wie sie bei einer aus Schlauchabschnitt und Rohrteil bestehenden Druckleitung auftreten können, jedoch nicht.

Ausgehend vom gattungsbildenden Stand der Technik gemäß der DE-A-42 30 889 liegt der Erfindung daher die Aufgabe zugrunde, eine einfach ausgebildete Halterung für eine Druckleitung zu schaffen, die eine sichere und zuverlässige Anbindung der Druckleitung an einem Druckanschluß unterstützt bzw. gewährleistet.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 11.

Erfindungsgemäß hat eine Halterung, die eine Druckleitung, insbesondere eine Bremsleitung, welche ein mit einem Schlauchabschnitt mittels eines Verbinders verbundenes Rohrteil aufweist, an dem eine Armatur angebracht ist, und ein Gehäuse, insbesondere ein Bremssattelgehäuse umfaßt, das einen Druckanschluß aufweist, an dem das Rohrteil der Druckleitung mittels der Armatur angeschlossen ist, einen Haltebügel mit einem ersten Abschnitt, mittels dessen die Druckleitung an dem Verbinder oder am Rohrteil aufgelagert ist, und einem mit dem ersten Abschnitt starr verbundenen zweiten Abschnitt, an dem der Haltebügel mittels der Armatur am Gehäuse festgelegt ist, wobei der Haltebügel an seinem zweiten Abschnitt zwischen der Armatur der Druckleitung und dem Gehäuse federnd festgelegt ist, wozu der zweite Abschnitt des Haltebügels federnd ausgebildet ist.

Somit wird eine denkbar einfach ausgebildete Haltung zum kostengünstigen Ersatz der bekannten Ringarmaturen geschaffen, bei der der Haltebügel mit seinem ersten Abschnitt insbesondere über den Schlauchabschnitt der Druckleitung einwirkende Biegeund Torsionsmomente aufnimmt und mit seinem zweiten Abschnitt über die Armatur in das Gehäuse weiterleitet, ohne daß das Rohrteil der Druckleitung übermäßigen Beanspruchungen ausgesetzt wäre. Mit anderen Worten gesagt wird das Rohrteil vollständig oder mindestens teilweise durch den Haltebügel mechanisch überbrückt. Im Ergebnis wird eine druckdichte Anbindung der Druckleitung am Gehäuse dauerhaft gewährleistet. Hierbei kann der erste Abschnitt des Haltebügels in vorteilhafter Weise gleichzeitig dazu dienen, den Schlauchabschnitt der Druckleitung vom Gehäuse um einen vorbestimmten Betrag zu beabstanden, so daß der Schlauchabschnitt thermisch nicht beschädigt werden kann. Von Vorteil ist weiterhin, daß für den Haltebügel keine eigenen Befestigungsmittel vorzusehen sind, dieser vielmehr durch die ohnehin an den Druckanschluß des Gehäuses anzuschließende Armatur mit seinem zweiten Abschnitt am Gehäuse festgelegt wird.

Durch die federnde Ausbildung des zweiten Abschnitts des Haltebügels und die damit ermöglichte federnde Festlegung des Haltebügels an seinem zweiten Abschnitt können zum einen Konturtoleranzen des Rohrteils ausgeglichen werden, ohne daß der Haltebügel selbst das Rohrteil übermäßig verspannt. Zum anderen bedarf es an der Anlagefläche für den Haltebügel keiner besonderen Bearbeitung des Gehäuses. Weiterhin werden durch die elastische Ausbildung des zweiten Abschnitts Relativbewegungen des Haltebügels bezüglich des Gehäuses und damit auch unerwünschte Klappergeräusche des Haltebügels unterbunden.

Nach der Lehre des Patentanspruchs 2 weist der erste Abschnitt des Haltebügels endseitig einen hinterschnittenen Schlitz auf, in dem der Verbinder oder das Rohrteil der Druckleitung in der Art einer Schnappverbindung auf einfache Weise festgelegt ist. Vorteilhaft ist somit auch eine Vormontage des Haltebügels an der Druckleitung möglich.

In einer im Patentanspruch 3 angegebenen, dazu alternativen Ausgestaltung weist der erste Abschnitt des Haltebügels endseitig einen von Armen begrenzten Schlitz zur Aufnahme eines am Verbinder angebrachten Zwischenteils auf, welches am Haltebügel durch plastisches Biegen der Arme kraft- und formschlüssig festgelegt ist. Eine solche kraft- und formschlüssige Festlegung der Druckleitung am Haltebügel in allen Richtungen bietet sich an, wenn an der Druckleitung etwa durch starkes Biegen des Schlauchabschnitts hervorgerufene, hohe Zwangskräfte wirken, die im Falle der oben angesprochenen Schnappverbindung möglicherweise zu einem unbeabsichtigten Lösen der Verbindung führen könnten.

Das Zwischenteil weist hierbei zweckmäßig einen im wesentlichen U-förmigen Querschnitt auf und ist auf einen Fortsatz des Verbinders aufgeklipst, wie im Patentanspruch 4 angegeben. Ein solches Zwischenteil läßt sich leicht nachträglich an der Druckleitung montieren, bevor die Druckleitung am Haltebügel wie oben beschrieben festgelegt wird. Es ist aber auch denkbar, daß das Zwischenteil als Ringteil ausgebildet ist, welches in der Art einer Hülse auf den Fortsatz des Verbinders aufgeschoben wird, bevor die Armatur am Rohrteil der Druckleitung montiert wird.

Entsprechend der Lehre des Patentanspruchs 5 tragen die Arme am ersten Abschnitt des Haltebügels auf den einander zugewandten Seiten Vorsprünge bzw. Krampen, die unter plastischem Biegen der Arme zur Festlegung des Zwischenteils am Haltebügel in das vorzugsweise aus Kunststoff bestehende Zwischenteil eingedrückt sind. Somit wird auf denkbar einfache Weise ein zuverlässiger Kraft- und Formschluß zwischen dem Zwischenteil und dem Haltebügel erzielt.

In den Patentansprüchen 6 bis 8 sind bevorzugte Alternativen zur federnden Ausbildung des zweiten Abschnitts des Haltebügels angegeben. Gemäß dem Patentanspruch 6 weist der zweite Abschnitt des Haltebügels eine Öffnung auf und geht an seinem vom ersten Abschnitt abgewandten Ende in eine abgewinkelte Federzunge über, die eine weitere Öffnung hat, wobei sich die Armatur der Druckleitung im am Gehäuse montierten Zustand durch die ausgefluchteten Öffnungen hindurch erstreckt, derart, daß der Haltebügel mit der Federzunge und dem zweiten Abschnitt zwischen einem Bund der Armatur und dem Gehäuse federnd eingespannt ist.

Entsprechend der Lehre des Patentanspruchs 7 ist dabei das dem ersten Abschnitt des Haltebügels zugewandte Ende der Federzunge vorzugsweise in Richtung des zweiten Abschnitts des Haltebügels abgekröpft und stützt sich am zweiten Abschnitt ab, wobei sich die Federzunge im Bereich der in der Federzunge ausgebildeten Öffnung im wesentlichen parallel zum zweiten Abschnitt des Haltebügels erstreckt, so daß die Federzunge in vorteilhafter Weise flächig und definiert am Bund der Armatur zur Anlage gelangen kann.

Nach der Lehre des Patentanspruchs 8 hingegen weist der zweite Abschnitt des Haltebügels eine Öffnung für die Armatur der Druckleitung auf, wobei im Bereich der Öffnung ausgestellte Federarme am zweiten Abschnitt des Haltebügels vorgesehen sind, die im am Gehäuse montierten Zustand der Armatur den Haltebügel zwischen einem Bund der Armatur und dem Gehäuse federnd einspannen.

Der Patentanspruch 9 sieht vor, daß der Haltebügel im am Gehäuse montierten Zustand der Armatur der Druckleitung gegen ein Verdrehen bezüglich des Gehäuses gesichert ist. Gemäß bevorzugten, einfachen Ausgestaltungen dieser Verdrehsicherung sitzt der zweite Abschnitt des Haltebügels formschlüssig in einer entsprechenden Aussparung des Gehäuses, hat ein Positionierloch, durch das sich ein am Gehäuse festgelegter Stift erstreckt, oder ist mit einer Abkantung versehen, die in eine Aussparung des Gehäuses eingreift.

Wenn das Rohrteil der Druckleitung gebogen sein sollte, schließt der erste Abschnitt mit dem zweiten Abschnitt des Haltebügels zweckmäßig einen vorbestimmten Winkel ein, wie im Patentanspruch 10 angegeben, wobei der Haltebügel zur Aussteifung im Übergangsbereich zwischen dem ersten Abschnitt und dem zweiten Abschnitt vorzugsweise mit einer Profilierung versehen ist.

Schließlich kann der Haltebügel nach der Lehre des Patentanspruchs 11 aus einem Federbandstahl bestehen, so daß der Haltebügel kostengünstig als gebogenes Stanz- oder Feinschneidteil ausgebildet werden kann.

Im folgenden wird die Erfindung anhand bevorzugter Ausführungsbeispiele unter Bezugnahme auf die beigefügte Zeichnung näher erläutert, wobei gleiche oder ähnliche Teile durch entsprechende Bezugszahlen mit ggf. vorgestellter weiterer Zahl gekennzeichnet sind. In der Zeichnung zeigen:
- Fig. 1: eine perspektivische Ansicht eines ersten Ausführungsbeispiels einer erfindungsgemäßen Halterung für eine Druckleitung mit einem Haltebügel, wobei die Halterung in einer Einbausituation an einem schematisiert dargestellten Gehäuse gezeigt ist,
- Fig. 2: eine perspektivische Ansicht des in Fig. 1 gezeigten Haltebügels,
- Fig. 3: eine perspektivische Ansicht eines zweiten Ausführungsbeispiels einer erfindungsgemäßen Halterung für eine Druckleitung mit einem anderen Haltebügel, wobei der Haltebügel in einem an der Druckleitung vormontierten Zustand dargestellt ist,
- Fig. 4: eine perspektivische Ansicht des in Fig. 3 gezeigten Haltebügels,
- Fig. 5 bis 7: der Fig. 3 entsprechende perspektivische Ansichten von Varianten des zweiten Ausführungsbeispiels, die unterschiedliche Haltebügel aufweisen,
- Fig. 8: eine perspektivische Ansicht eines dritten Ausführungsbeispiels einer erfindungsgemäßen Halterung für eine Druckleitung mit einem Haltebügel, der sich von den Haltebügeln der vorhergehenden Ausführungsbeispiele unterscheidet, wobei der Haltebügel in einem Zustand dargestellt ist, bevor er an der Druckleitung vormontiert wird,
- Fig. 9: eine aufgebrochene Seitenansicht der in Fig. 8 gezeigten Halterung,
- Fig. 10: eine Draufsicht auf die in Fig. 8 gezeigte Halterung von oben in Fig. 9 und
- Fig. 11: eine Vorderansicht der in Fig. 8 gezeigten Halterung von links in Fig. 9.

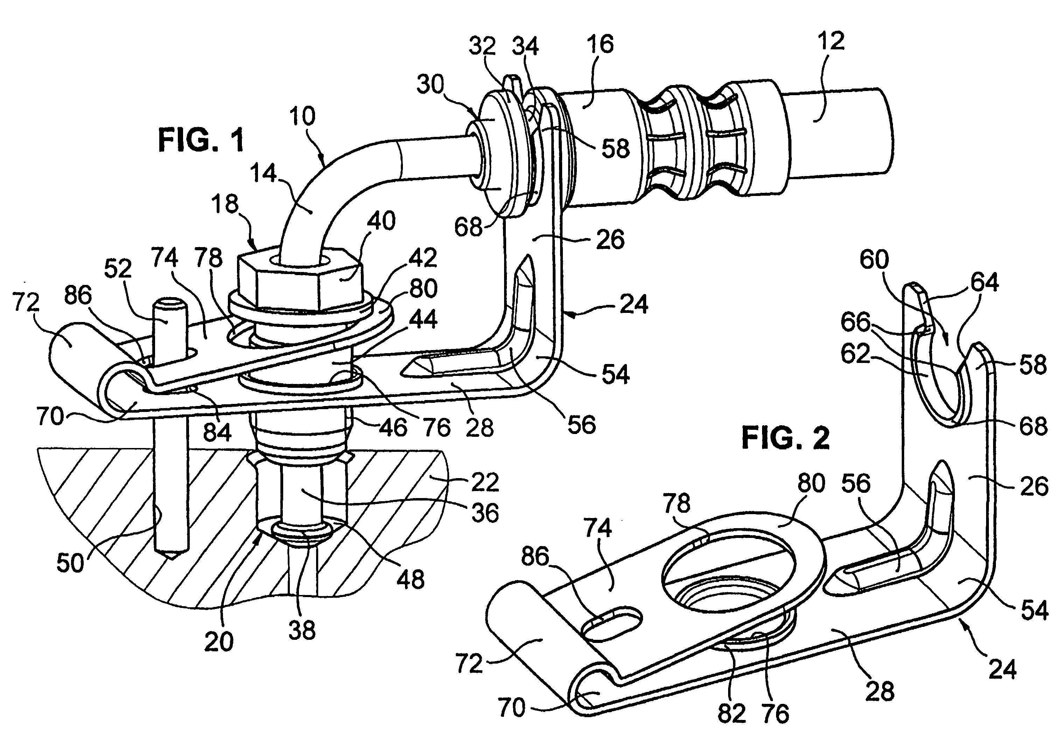

In Fig. 1 ist eine Halterung für eine Druckleitung 10 dargestellt, die einen vornehmlich aus einem elastomeren Werkstoff bestehenden Schlauchabschnitt 12 und ein metallisches Rohrteil 14 aufweist, wobei der Schlauchabschnitt 12 mit dem Rohrteil 14 mittels eines an sich bekannten Verbinders 16 z.B. durch Verkrimpen verbunden ist. An dem Rohrteil 14 ist als Armatur eine Überwurfschraube 18 angebracht, mittels der die Druckleitung 10 an einem Druckanschluß 20 eines lediglich schematisch dargestellten Gehäuses 22 z.B. eines Bremssattels fluiddicht angeschlossen werden kann. Weiterhin hat die Halterung einen vorzugsweise aus einem Federbandstahl gefertigten Haltebügel 24 mit einem ersten Abschnitt 26, mittels dessen die Druckleitung 10 an dem Verbinder 16 (oder - alternativ dazu - am Rohrteil 14) aufgelagert werden kann, und einem mit dem ersten Abschnitt 26 starr verbundenen zweiten Abschnitt 28, an dem der Haltebügel 24 unter Zuhilfenahme der Überwurfschraube 18 am Gehäuse 22 festgelegt werden kann, wie noch näher beschrieben werden wird.

Der Verbinder 16 der Druckleitung 10 ist an seinem dem Rohrteil 14 zugewandten Ende mit einem vorzugsweise elastischen Zwischenteil 30 versehen, welches in der Art einer Hülse auf dem Rohrteil 14 sitzt und einen Bund 32 aufweist, in dem am Außenumfang eine umlaufende Nut 34 eingebracht ist. Ausgehend von dem Verbinder 16 ist das Rohrteil 14 in einem Bogen um etwa 90° gebogen und erstreckt sich durch die Überwurfschraube 18 hindurch. Das über die Überwurfschraube 18 in Fig. 1 nach unten vorstehende freie Ende 36 des Rohrteil 14 ist mit einem Bördel 38 nach DIN 74 234 versehen.

Die Überwurfschraube 18 ist in Längsrichtung am Rohrteil 14 festgelegt, kann sich in Umfangsrichtung bezüglich des Rohrteils 14 aber drehen. In Fig. 1 ist weiterhin zu erkennen, daß die Überwurfschraube 18 einen Handhabungsabschnitt 40 hat, an dem zur Montage der Druckleitung 10 an dem Gehäuse 22 mit einem Maulschlüssel angegriffen werden kann. An den Handhabungsabschnitt 40 schließt sich in Fig. 1 nach unten ein Ringbund 42 an. Schließlich hat die Überwurfschraube 18 unterhalb des Ringbunds 42 einen Befestigungsabschnitt 44, der im dargestellten Ausführungsbeispiel mit einem Außengewinde 46 versehen ist.

Der Druckanschluß 20 des Gehäuses 22 weist ein Innengewinde (nicht dargestellt) auf, in das die Überwurfschraube 18 mit dem Außengewinde 46 ihres Befestigungsabschnitts 44 eingeschraubt werden kann. Im eingeschraubten Zustand der Überwurfschraube 18 wird der Bördel 38 am Ende 36 des Rohrteils 14 fluiddicht gegen einen Dichtkegel 48 des Druckanschlusses 20 gepreßt. Zum Gehäuse 22 ist ferner anzumerken, daß das Gehäuse 22 in Fig. 1 der besseren Übersichtlichkeit halber am in Fig. 1 oberen Ende abgeschnitten dargestellt ist. Tatsächlich liegt im montierten Zustand der Druckleitung 10 der zweite Abschnitt 28 des Haltebügels 24 am Gehäuse 22 an. In die dem Haltebügel 24 zugewandte Außenfläche des Gehäuses 22 ist im dargestellten Ausführungsbeispiel schließlich noch eine Sackbohrung 50 eingebracht, die der Aufnahme eines Stifts 52 zur Verdrehsicherung des Haltebügels 24 dient.

Bei dem in Fig. 2 einzeln dargestellten, aus einem Blechabschnitt mit über der Länge konstanter Breite gebogenen Haltebügel 24 schließt der erste Abschnitt 26 mit dem zweiten Abschnitt 28 einen vorbestimmten Winkel von ca. 90° ein. Zur Aussteifung kann der Haltebügel 24 im bzw. am Übergangsbereich 54 zwischen dem ersten Abschnitt 26 und dem zweiten Abschnitt 28 mit einer sich in Längserstreckungsrichtung des Haltebügels 24 erstreckenden Profilierung 56 versehen sein.

Wie insbesondere in Fig. 2 gut zu erkennen ist, hat der erste Abschnitt 26 des Haltebügels 24 an seinem freien Ende 58 einen hinterschnittenen Schlitz 60, welcher einen teilzylindrischen Schlitzgrund 62 und Fügeschrägen 64 aufweist. Der lichte Abstand der Übergangsbereiche 66 zwischen dem Schlitzgrund 62 und den Fügeschrägen 64 ist zur Ausbildung des Hinterschnitts geringfügig kleiner gehalten als der Innendurchmesser des Schlitzgrunds 62. Ferner kann im Bereich des Schlitzgrunds 62 ein Bund 68 am ersten Abschnitt 26 des Haltebügels 24 angeprägt sein, um die Innenumfangsfläche des Schlitzgrunds 62 in axialer Richtung zu vergrößern. Im an der Druckleitung 10 vormontierten Zustand des Haltebügels 24 ist das Zwischenteil 30 des Verbinders 16 im Bereich der Nut 34 am Bund 32 im Schlitz 60 des ersten Abschnitts 26 des Haltebügels 24 eingeschnappt bzw. in der Art einer Schnappverbindung festgelegt, wie Fig. 1 zeigt.

Der Haltebügel 24 ist im am Gehäuse 22 montierten Zustand der Druckleitung 10 an seinem zweiten Abschnitt 28 federnd zwischen dem Gehäuse 22 und der Überwurfschraube 18 festgelegt, wozu der zweite Abschnitt 28 federnd ausgebildet ist. Genauer gesagt geht im dargestellten Ausführungsbeispiel der zweite Abschnitt 28 des Haltebügels 24 an seinem vom ersten Abschnitt 26 abgewandten Ende 70 über einen im Querschnitt C-förmigen Übergangsabschnitt 72 in eine bezüglich des zweiten Abschnitts 28 um fast 180° abgewinkelte Federzunge 74 über, die sich über die Hälfte des zweiten Abschnitts 28 hinaus in Richtung des ersten Abschnitts 26 zurückerstreckt. In Fig. 1 ist die Federzunge 74 ausgehend vom zweiten Abschnitt 28 nach oben abgewinkelt, ein Abwinkeln der Federzunge nach unten ist prinzipiell aber auch möglich.

Der zweite Abschnitt 28 ist weiterhin im wesentlichen mittig mit einer kreisrunden Öffnung 76 versehen, die mit einer ovalen Öffnung 78 am Ende 80 der Federzunge 74 in Längserstreckungsrichtung des ersten Abschnitts 26 des Haltebügels 24 ausgefluchtet ist. Auch die Öffnung 76 kann zur Vergrößerung der axialen Länge ihrer Innenumfangsfläche mit einem angeprägten Bund 82 versehen sein. Dieser Bund 82 verhindert, daß sich der zweite Abschnitt 28 bei der Montage des Haltebügels 24 am Außengewinde 46 der Überwurfschraube 18 festhängen kann bzw. dient der Führung des zweiten Abschnitts 28 des Haltebügels 24 an der Überwurfschraube 18 der Druckleitung 10. Wie in Fig. 1 gut zu erkennen ist, erstreckt sich die Überwurfschraube 18 mit ihrem Befestigungsabschnitt 44 im am Druckanschluß 20 des Gehäuses 22 montierten Zustand der Druckleitung 10 durch die ausgefluchteten Öffnungen 76, 78 des Haltebügels 24 mit geringem Radialspiel zur Öffnung 76 hindurch. Dabei liegt die Federzunge 74 des Haltebügels 24 federnd am Ringbund 42 der Überwurfschraube 18 an, während der zweite Abschnitt 28 des Haltebügels 24 federnd gegen die dem Haltebügel 24 zugewandte Außenfläche des Gehäuses 22 gedrückt wird. Im Ergebnis ist der Haltebügel 24 mit der Federzunge 74 und dem zweiten Abschnitt 28 zwischen dem Ringbund 42 der Überwurfschraube 18 und dem Gehäuse 22 elastisch eingespannt bzw. mit einer definierten Vorspannkraft gehalten. Die Überwurfschraube 18 erfüllt hier also eine Doppelfunktion; zum einen drückt sie den Bördel 38 am Ende 36 des Rohrteils 14 in eine fluiddichte Anlage zum Dichtkegel 48 am Druckanschluß 20 des Gehäuses 22, zum anderen spannt sie den Haltebügel 24 an seinem zweiten Abschnitt 28 elastisch gegen das Gehäuse 22.

Ferner weist der zweite Abschnitt 28 im wesentlichen mittig zwischen der Öffnung 76 und dem Übergangsabschnitt 72 ein gegenüber der Öffnung 76 deutlich kleineres Positionierloch 84 (siehe Fig. 1) auf, welches mit einem Langloch 86 in der Federzunge 74 ausgefluchtet ist. Im am Gehäuse 22 montierten Zustand der Überwurfschraube 18 durchgreift der in der Sackbohrung 50 des Gehäuses 22 festgelegte Stift 52 das Positionierloch 84 im zweiten Abschnitt 28 und das Langloch 86 in der Federzunge 74, um den Haltebügel 24 gegen ein Verdrehen bezüglich des Gehäuses 22 zu sichern.

Zu erwähnen ist in diesem Zusammenhang schließlich noch, daß sowohl die Öffnung 78 als auch das Langloch 86 der Federzunge 74 zum Befestigungsabschnitt 44 der Überwurfschraube 18 bzw. zum Stift 52 ein ausreichendes Radialspiel aufweist, derart, daß weder die Überwurfschraube 18 noch der Stift 52 die Federzunge 74 am federn hindert. Es ist unmittelbar ersichtlich, daß im montierten Zustand des Haltebügels 24 über den Schlauchabschnitt 12 der Druckleitung 10 auf den Verbinder 16 wirkende Kräfte bzw. Momente durch das Zwischenteil 30 in den ersten Abschnitt 26 des Haltebügels 24 eingeleitet, von dort über den zweiten Abschnitt 28 des Haltebügels 24 weitergeleitet und schließlich durch die Überwurfschraube 18 bzw. den Stift 52 gegenüber dem Gehäuse 22 abgestützt werden, wobei weder das Rohrteil 14 der Druckleitung 10 über Gebühr beansprucht noch die Dichtstelle zwischen dem Bördel 38 am Ende 36 des Rohrteils 14 und dem Dichtkegel 48 im Druckanschluß 20 des Gehäuses 22 auf irgendeine Art und Weise beeinträchtigt wird.

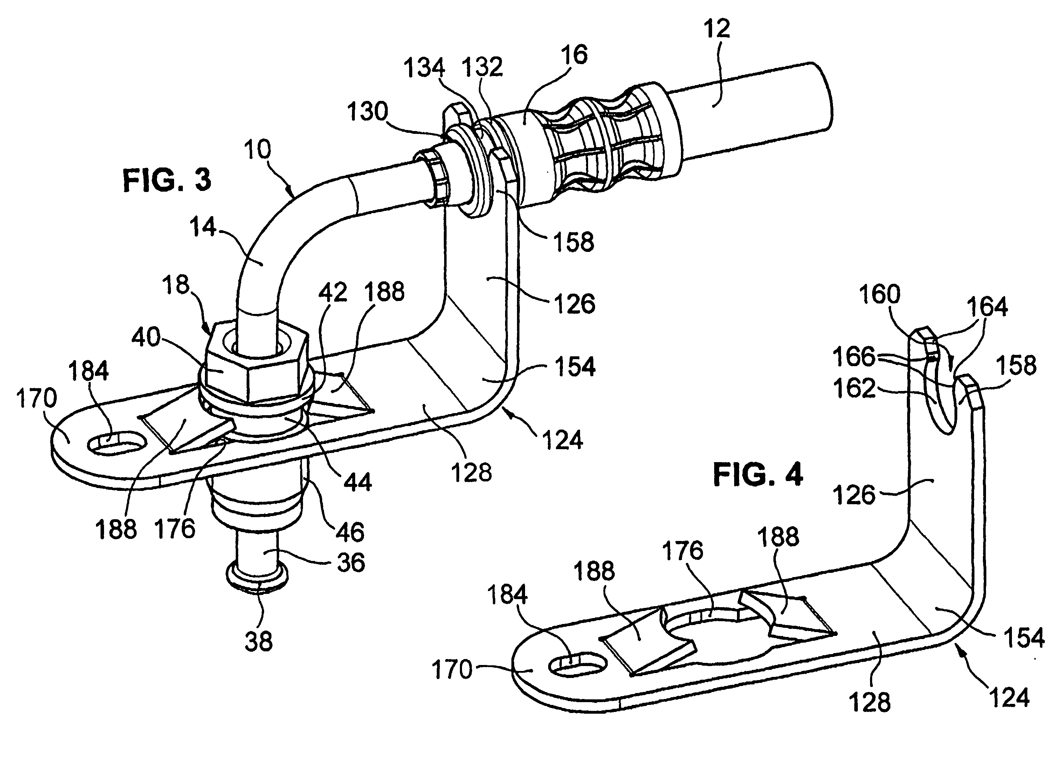

Das in den Fig. 3 und 4 dargestellte zweite Ausführungsbeispiel soll im folgenden nur hinsichtlich seiner sich vom oben beschriebenen ersten Ausführungsbeispiel unterscheidenden Merkmale beschrieben werden. Die obigen Ausführungen zur Funktion bzw. Wirkung des Haltebügels 124 gelten analog.

Der Haltebügel 124 ist gegenüber dem Haltebügel 24 insgesamt vereinfacht ausgebildet. So sind Bünde an dem Schlitz 160 und der Öffnung 176 ebenso wie eine Profilierung zwischen dem ersten und zweiten Abschnitt 126, 128 des Haltebügels 124 nicht vorgesehen. Anstelle einer Federzunge hat der Haltebügel 124 in Fig. 4 nach oben ausgestellte Federarme 188 im Bereich der Öffnung 176 für den Durchtritt des Befestigungsabschnitts 44 der Überwurfschraube 18. Diese Federarme 188 werden durch Einbringen von Längsschlitzen zu beiden Seiten der Öffnung 176 und anschließendes Hochbiegen der freigeschnittenen Teile des zweiten Abschnitts 128 des Haltebügels 124 ausgebildet. Im am Gehäuse montierten Zustand der Druckleitung 10 liegen die Federarme 188 federnd am Ringbund 42 der Überwurfschraube 18 und der zweite Abschnitt 128 federnd am Gehäuse an, so daß der Haltebügel 124 mit seinem zweiten Abschnitt 128 elastisch eingespannt ist. Eine Verdrehsicherung des Haltebügels 124 erfolgt entsprechend dem ersten Ausführungsbeispiel mittels eines am Gehäuse festgelegten Stifts, der das Positionierloch 184 durchgreift.

Obgleich in den Figuren nicht dargestellt, kann eine Verdrehsicherung des Haltebügels bezüglich des Gehäuses auch dadurch ausgebildet werden, daß der zweite Abschnitt des Haltebügels mit seinen Seiten formschlüssig in einer komplementären Aussparung, z.B. einer Nut des Gehäuses aufgenommen ist.

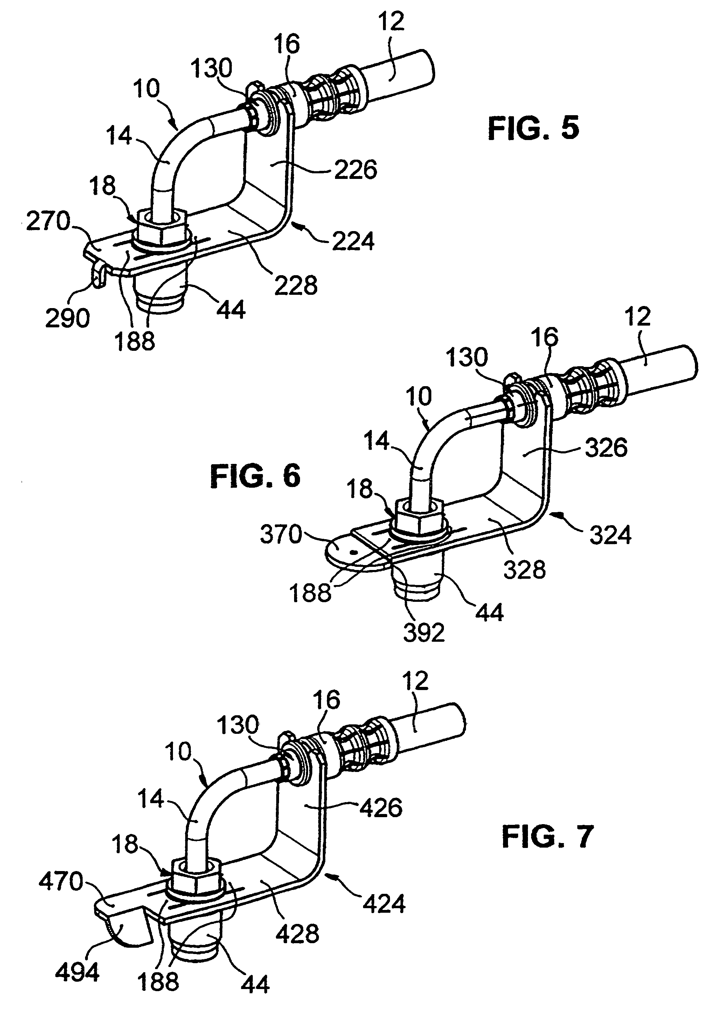

Weitere einfache Alternativen für die Ausbildung einer Verdrehsicherung, die den jeweiligen Erfordernissen entsprechend zur Anwendung gelangen können, sind in den Fig. 5 bis 7 dargestellt. So kann gemäß Fig. 5 der zweite Abschnitt 228 des Haltebügels 224 an seinem vom ersten Abschnitt 226 abgewandten Ende 270 eine in Richtung des Gehäuses abgebogene Nase 290 aufweisen, die im montierten Zustand des Haltebügels 224 in eine entsprechende Aussparung des Gehäuses eingreift. In Fig. 6 ist das vom ersten Abschnitt 326 des Haltebügels 324 abgewandte Ende 370 des zweiten Abschnitts 328 insgesamt unter Ausbildung einer Stufe 392 nach unten setzverformt, um im montierten Zustand des Haltebügels 324 z.B. eine Kante des Gehäuses formschlüssig zu hintergreifen. Die Fig. 7 zeigt schließlich eine Variante, bei der das vom ersten Abschnitt 426 des Haltebügels 424 abgewandte Ende 470 des zweiten Abschnitts 428 bis etwa zur Mitte quergeschlitzt und der freigeschnittene Teil des Endes 470 zur Ausbildung einer Abkantung 494 nach unten gebogen ist, wobei die Abkantung 494 im montierten Zustand des Haltebügels 424 beispielsweise eine Gehäusefläche hintergreift.

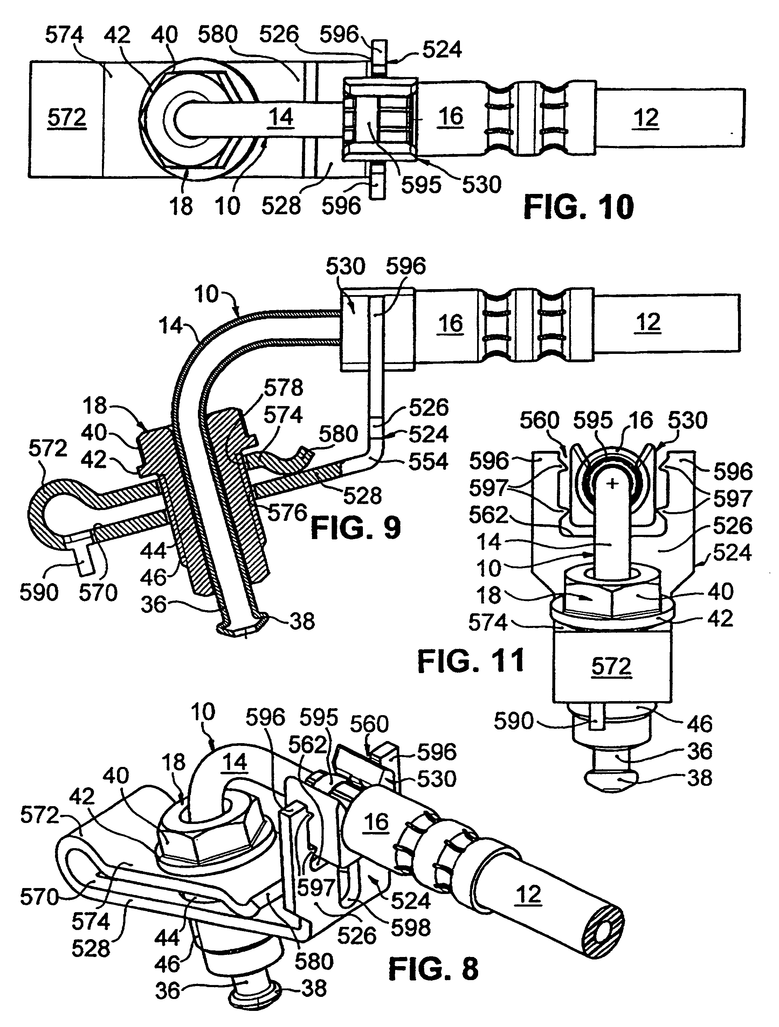

Das in den Fig. 8 bis 11 dargestellte dritte Ausführungsbeispiel soll im folgenden nur hinsichtlich seiner sich von den oben beschriebenen Ausführungsbeispielen unterscheidenden Merkmale beschrieben werden. Die obigen Ausführungen zur Funktion bzw. Wirkung des Haltebügels, insbesondere der Federzunge am zweiten Abschnitt des Haltebügels, gelten analog.

Wie insbesondere der Fig. 9 zu entnehmen ist, ist beim dritten Ausführungsbeispiel der Halterung zunächst das Rohrteil 14 den Einbauerfordernissen entsprechend stärker gebogen als bei den vorhergehenden Ausführungsbeispielen. Dementsprechend schließt der zweite Abschnitt 528 des Haltebügels 524 mit dem sich senkrecht zur Längsachse des Verbinders 16 erstreckenden und - wie die Fig. 8 und 11 zeigen - sich zum Übergangsbereich 554 hin verjüngenden ersten Abschnitt 526 des Haltebügels 524 einen Winkel ein, der größer ist als 90°.

Im Bereich des ersten Abschnitts 526 des Haltebügels 524 unterscheidet sich dieser ferner von den vorhergehenden Ausführungsbeispielen in der Art und Weise der Festlegung der Druckleitung 10 am Haltebügel 524. Gemäß den Fig. 8 und 10 weist hier der Verbinder 16 einen mit dem Rohrteil 14 verkrimpten Fortsatz 595 auf, der gegenüber dem restlichen Teil des Verbinders 16 im Durchmesser reduziert ist. Auf den Fortsatz 595 ist ein vorzugsweise aus Kunststoff bestehendes Zwischenteil 530 aufgeklipst, welches einen im wesentlichen U-förmigen Querschnitt hat. Das Zwischenteil 530 ist seinerseits in kraft- und formschlüssiger Weise am Haltebügel 524 festlegbar, so daß der Fortsatz 595 des Verbinders 16 sich nicht aus der Klipsverbindung zum Zwischenteil 530 lösen kann.

Hierzu weist der erste Abschnitt 526 des Haltebügels 524 endseitig einen von Armen 596 begrenzten Schlitz 560 zur Aufnahme des am Verbinder 16 angebrachten Zwischenteils 530 auf. Die Arme 596 tragen auf den einander zugewandten Seiten vorzugsweise spitze Vorsprünge bzw. Krampen 597, welche unter plastischem Biegen der Arme 596 in Richtung aufeinander zu zur Festlegung des Zwischenteils 530 am Haltebügel 524 in das Zwischenteil 530 eindrückbar sind. In den Figuren sind die Arme 596 lediglich zur Vereinfachung der Darstellung im nicht verformten Zustand gezeigt. Ein sich ausgehend vom Schlitzgrund 562 in Fig. 8 nach unten erstreckender, weiterer Schlitz 598 sorgt im übrigen dafür, daß die Arme 596 zur Festlegung des Zwischenteils 530 am Haltebügel 524 ausreichend weit nach innen gebogen werden können.

Zur (Vor)Montage des Haltebügels 524 an der Druckleitung 10 wird das auf den Fortsatz 595 des Verbinders 16 aufgeklipste Zwischenteil 530 mittels einer nicht dargestellten Montagevorrichtung bezüglich des Haltebügels 524 positioniert, bevor die Arme 596 am ersten Abschnitt 526 des Haltebügels 524 zur kraftund formschlüssigen Festlegung des Zwischenteils 530 unter plastischer Verformung zum Inneren des Schlitzes 560 hin gebogen werden, wobei die an den Armen 596 vorgesehenen Vorsprünge 597 in die Außenfläche des Zwischenteils 530 eindringen. Alternativ oder in Ergänzung dazu könnte das Zwischenteil zumindest an seinen den Armen am ersten Abschnitt des Haltebügels zugewandten Außenflächen auch mit Nuten versehen sein, in die die Arme zur Festlegung des Zwischenteils am Haltebügel hineingebogen werden können.

Weiterhin ist der zweite Abschnitt 528 des Haltebügels 524 anders ausgebildet als bei den vorhergehend beschriebenen Ausführungsbeispielen. Als Drehmomentstütze weist hier der zweite Abschnitt 528 zunächst nahe dem Übergangsabschnitt 572 zur Federzunge 574 gemäß den Fig. 9 und 11 eine nach unten ausgestellte Blechnase 590 auf.

Des weiteren ist die Federzunge 574 bezüglich des zweiten Abschnitts 528 des Haltebügels 524 um 180° abgewinkelt, so daß sich die Federzunge 574 zumindest im Bereich der in der Federzunge 574 ausgebildeten Öffnung 578 im wesentlichen parallel zum zweiten Abschnitt 528 des Haltebügels 524 erstreckt. Hierbei sind beide Öffnungen 576, 578 in dem zweiten Abschnitt 528 bzw. der Federzunge 574 in herstellungstechnisch einfacher Weise kreisrund ausgebildet, wobei ihr Innendurchmesser geringfügig größer ist als der Außendurchmesser des Außengewindes 46 der Überwurfschraube 18, um ein geringfügiges Radialspiel zu gestatten. Schließlich ist das dem ersten Abschnitt 526 des Haltebügels 524 zugewandte Ende 580 der Federzunge 574 in Richtung des zweiten Abschnitts 528 des Haltebügels 524, d.h. in Fig. 9 nach unten abgekröpft und stützt sich am zweiten Abschnitt 528 ab.

### Bezugszeichenliste

- 10: Druckleitung
- 12: Schlauchabschnitt
- 14: Rohrteil
- 16: Verbinder
- 18: Überwurfschraube
- 20: Druckanschluß
- 22: Gehäuse
- 24, 124, 224, 324, 424, 524: Haltebügel
- 26, 126, 226, 326, 426, 526: erster Abschnitt
- 28, 128, 228, 328, 428, 528: zweiter Abschnitt
- 30, 130, 530: Zwischenteil
- 32, 132: Bund
- 34, 134: Nut
- 36: Ende
- 38: Bördel
- 40: Handhabungsabschnitt
- 42: Ringbund
- 44: Befestigungsabschnitt
- 46: Außengewinde
- 48: Dichtkegel
- 50: Sackbohrung
- 52: Stift
- 54, 154, 554: Übergangsbereich
- 56: Profilierung
- 58, 158: Ende
- 60, 160, 560: Schlitz
- 62, 162, 562: Schlitzgrund
- 64, 164: Fügeschräge
- 66, 166: Übergangsbereich
- 68: Bund
- 70, 170, 270, 370, 470, 570: Ende
- 72, 572: Übergangsabschnitt
- 74, 574: Federzunge
- 76, 176, 576: Öffnung
- 78, 578: Öffnung
- 80, 580: Ende
- 82: Bund
- 84, 184: Positionierloch
- 86: Langloch

- 188: Federarm
- 290, 590: Nase
- 392: Stufe
- 494: Abkantung
- 595: Fortsatz
- 596: Arm
- 597: Vorsprung
- 598: Schlitz

## Patentansprüche

1. Halterung für eine Druckleitung (10), mit
einer Druckleitung (10), insbesondere einer Bremsleitung, die ein mit einem Schlauchabschnitt (12) mittels eines Verbinders (16) verbundenes Rohrteil (14) aufweist, an dem eine Armatur (18) angebracht ist, und
einem Gehäuse (22), insbesondere einem Bremssattelgehäuse, das einen Druckanschluß (20) aufweist, an dem das Rohrteil (14) der Druckleitung (10) mittels der Armatur (18) angeschlossen ist,
**gekennzeichnet durch** einen Haltebügel (24, 124, 224, 324, 424, 524) mit
einem ersten Abschnitt (26, 126, 226, 326, 426, 526), mittels dessen die Druckleitung (10) an dem Verbinder (16) oder am Rohrteil (14) aufgelagert ist, und
einem mit dem ersten Abschnitt (26, 126, 226, 326, 426, 526) starr verbundenen zweiten Abschnitt (28, 128, 228, 328, 428, 528), an dem der Haltebügel (24, 124, 224, 324, 424, 524) mittels der Armatur (18) am Gehäuse (22) festgelegt ist,
wobei der Haltebügel (24, 124, 224, 324, 424, 524) an seinem zweiten Abschnitt (28, 128, 228, 328, 428, 528) zwischen der Armatur (18) der Druckleitung (10) und dem Gehäuse (22) federnd festgelegt ist, wozu der zweite Abschnitt (28, 128, 228, 328, 428, 528) des Haltebügels (24, 124, 224, 324, 424, 524) federnd ausgebildet ist.

2. Halterung nach Anspruch 1, **dadurch gekennzeichnet, daß** der erste Abschnitt (26, 126, 226, 326, 426) des Haltebügels (24, 124, 224, 324, 424) endseitig einen hinterschnittenen Schlitz (60, 160) aufweist, in dem der Verbinder (16) oder das Rohrteil (14) der Druckleitung (10) in der Art einer Schnappverbindung festgelegt ist.

3. Halterung nach Anspruch 1, **dadurch gekennzeichnet, daß** der erste Abschnitt (526) des Haltebügels (524) endseitig einen von Armen (596) begrenzten Schlitz (560) zur Aufnahme eines am Verbinder (16) angebrachten Zwischenteils (530) aufweist, welches am Haltebügel (524) durch plastisches Biegen der Arme (596) kraft- und formschlüssig festgelegt ist.

4. Halterung nach Anspruch 3, **dadurch gekennzeichnet, daß** das Zwischenteil (530) einen im wesentlichen U-förmigen Querschnitt aufweist und auf einen Fortsatz (595) des Verbinders (16) aufgeklipst ist.

5. Halterung nach Anspruch 3 oder 4, **dadurch gekennzeichnet, daß** die Arme (596) am ersten Abschnitt (526) des Haltebügels (524) auf den einander zugewandten Seiten Vorsprünge (597) tragen, die unter plastischem Biegen der Arme (596) zur Festlegung des Zwischenteils (530) am Haltebügel (524) in das vorzugsweise aus Kunststoff bestehende Zwischenteil (530) eingedrückt sind.

6. Halterung nach einem der vorhergehenden Ansprüche, **dadurch gekennzeichnet, daß** der zweite Abschnitt (28, 528) des Haltebügels (24, 524) eine Öffnung (76, 576) aufweist und an seinem vom ersten Abschnitt (26, 526) abgewandten Ende (70, 570) in eine abgewinkelte Federzunge (74, 574) übergeht, die eine weitere Öffnung (78, 578) hat, wobei sich die Armatur (18) der Druckleitung (10) im am Gehäuse (22) montierten Zustand durch die ausgefluchteten Öffnungen (76, 78; 576, 578) hindurch erstreckt, derart, daß der Haltebügel (24, 524) mit der Federzunge (74, 574) und dem zweiten Abschnitt (28, 528) zwischen einem Bund (42) der Armatur (18) und dem Gehäuse (22) federnd eingespannt ist.

7. Halterung nach Anspruch 6, **dadurch gekennzeichnet, daß** das dem ersten Abschnitt (526) des Haltebügels (524) zugewandte Ende (580) der Federzunge (574) in Richtung des zweiten Abschnitts (528) des Haltebügels (524) abgekröpft ist und sich am zweiten Abschnitt (528) abstützt, wobei sich die Federzunge (574) im Bereich der in der Federzunge (574) ausgebildeten Öffnung (578) im wesentlichen parallel zum zweiten Abschnitt (528) des Haltebügels (524) erstreckt.

8. Halterung nach einem der Ansprüche 1 bis 5, **dadurch gekennzeichnet, daß** der zweite Abschnitt (128) des Haltebügels (124) eine Öffnung (176) für die Armatur (18) der Druckleitung (10) aufweist, wobei im Bereich der Öffnung (176) ausgestellte Federarme (188) am zweiten Abschnitt (128) des Haltebügels (124) vorgesehen sind, die im am Gehäuse (22) montierten Zustand der Armatur (18) den Haltebügel (124) zwischen einem Bund (42) der Armatur (18) und dem Gehäuse (22) federnd einspannen.

9. Halterung nach einem der vorhergehenden Ansprüche, **dadurch gekennzeichnet, daß** der Haltebügel (24, 124, 224, 324, 424, 524) im am Gehäuse (22) montierten Zustand der Armatur (18) der Druckleitung (10) gegen ein Verdrehen bezüglich des Gehäuses (22) gesichert ist, wozu der zweite Abschnitt des Haltebügels entweder formschlüssig in einer entsprechenden Aussparung des Gehäuses (22) sitzt oder ein Positionierloch (84, 184) hat, durch das sich ein am Gehäuse (22) festgelegter Stift (52) erstreckt, oder mit einer Abkantung (290, 370, 494, 590) versehen ist, die in eine Aussparung des Gehäuses (22) eingreift.

10. Halterung nach einem der vorhergehenden Ansprüche, **dadurch gekennzeichnet, daß** das Rohrteil (14) gebogen ist und der erste Abschnitt (26, 126, 226, 326, 426, 526) mit dem zweiten Abschnitt (28, 128, 228, 328, 428, 528) des Haltebügels (24, 124, 224, 324, 424, 524) einen vorbestimmten Winkel einschließt, wobei der Haltebügel (24) zur Aussteifung im Übergangsbereich (54) zwischen dem ersten Abschnitt (26) und dem zweiten Abschnitt (28) vorzugsweise mit einer Profilierung (56) versehen ist.

11. Halterung nach einem der vorhergehenden Ansprüche, **dadurch gekennzeichnet, daß** der Haltebügel (24, 124, 224, 324, 424, 524) aus einem Federbandstahl besteht.

## Claims

1. Mounting for a pressure line (10), having a pressure line (10), in particular a brake line, which has a pipe part (14) connected to a hose portion (12) by means of a connector (16), a fitting (18) being attached to said pipe part (14) and a housing (22), in particular a brake caliper housing, having a pressure connection (20) to which the pipe part (14) of the pressure line (10) is connected by means of the fitting (18), **characterized by** a retaining clip (24, 124, 224, 324, 424, 524) having a first portion (26, 126, 226, 326, 426, 526), by means of which the pressure line (10) may be supported at the connector (16) or at the pipe part (14), and a second portion (28, 128, 228, 328, 428, 528) connected rigidly with the first portion (26, 126, 226, 326, 426, 526), by means of which second portion (28, 128, 228, 328, 428, 528) the retaining clip (24, 124, 224, 324, 424, 524) may be fixed to the housing (22) via the fitting (18) and the retaining clip (24, 124, 224, 324, 424, 524) may be secured with its second portion (28, 128, 228, 328, 428, 528) resiliently between the fitting (18) of the pressure line (10) and the housing (22), for which purpose the second portion (28, 128, 228, 328, 428, 528) of the retaining clip (24, 124, 224, 324, 424, 524) is of resilient construction.

2. Mounting according to claim 1, **characterized in that**, at its end, the first portion (26, 126, 226, 326, 426) of the retaining clip (24, 124, 224, 324, 424) has an undercut slot (60, 160), in which the connector (16) or the pipe part (14) of the pressure line (10) may be secured in the manner of a snap connection.

3. Mounting according to claim 1, **characterized in that** the first portion (526) of the retaining clip (524) is terminally provided with a slot (560) bounded by arms (596) for receiving an intermediate part (530) fitted to the connector (16) and which is positively and non-positively fixed to the retaining clip (524) by the plastic bending of the arms (596).

4. Mounting according to claim 3, **characterized in that** the intermediate part (530) has a substantially U-shaped cross-section and is clipped onto an extension (595) of the connector (16).

5. Mounting according to claim 3 or 4, **characterized in that** the arms (596) on the first portion (526) of the retaining clip (524) carry projections (597) on the facing sides and which, accompanied by a plastic bending of the arms (596), can be pressed into the preferably plastic intermediate part (530) for fixing the latter to the retaining clip (524).

6. Mounting according to one of the preceding claims, **characterized in that** the second portion (28, 528) of the retaining clip (24, 524) has an opening (76, 576) and passes, at its end (70, 570) remote from the first portion (26, 526), into a bent flexible tongue (74, 574) which has a further opening (78, 578), wherein the fitting (18) of the pressure line (10), when mounted on the housing (22), extends through the aligned openings (76, 78, 576, 578) in such a way that the retaining clip (24, 524) is clamped resiliently with its flexible tongue (74, 574) and its second portion (28, 528) between a flange (42) of the fitting (18) and the housing (22).

7. Mounting according to claim 6, **characterized in that** the end (580) of the flexible tongue (574) facing the first portion (526) of the retaining clip (524) is offset in the direction of the second portion (528) of the retaining clip (524) and is supported on the second portion (528), the flexible tongue (574) extending substantially parallel to the second portion (528) of the retaining clip (524) in the vicinity of the opening (578) formed in the flexible tongue (574).

8. Mounting according to one of the claims 1 to 5, **characterized in that** the second portion (128) of the retaining clip (124) comprises an opening (176) for the fitting (18) of the pressure line (10), wherein flexible arms (128) projecting in the area of the opening (176) are provided on the second portion (128) of the retaining clip (124), which flexible arms (188) clamp the retaining clip (124) resiliently between a flange (42) on the fitting (18) and the housing (22) when the fitting (18) is mounted on the housing (22).

9. Mounting according to one of the preceding claims, **characterized in that**, when the fitting (18) of the pressure line (10) is mounted in the housing (22), the retaining clip (24, 124, 224, 324, 424, 524) is secured against rotation relative to the housing (22), to which end the second portion of the retaining clip is either positively placed in a corresponding recess in the housing (22) or has a locating hole (84, 184), through which there extends a pin (52) secured to the housing (22), or is provided with a bevelled portion (290, 370, 494, 590) which engages in a recess in the housing (22).

10. Mounting according to one of the preceding claims, **characterized in that** the pipe part (14) is bent and the first portion (26, 236, 336, 326, 426, 526) forms a predetermined angle with the second portion (28, 128, 228, 328, 428, 528) of the retaining clip (24, 124, 224, 324, 424, 524), wherein the retaining clip (24) is preferably provided with profiling (56) for reinforcing purposes in the junction area (54) between the first portion (26) and the second portion (28).

11. Mounting according to one of the preceding claims, **characterized in that** the retaining clip (24, 124, 224, 324, 424, 524) is made from spring band steel.

## Revendications

1. Dispositif de maintien pour un conduit sous pression (10), comprenant :
- un conduit sous pression (10), en particulier un conduit de freinage, qui présente une pièce tubulaire (14) reliée à un tronçon de tuyau flexible (12) au moyen d'un raccord (16), sur laquelle est montée une ferrure (18) ; et
- un carter (22), en particulier un étrier de frein, qui présente un raccord de pression (20) auquel est raccordé la pièce tubulaire (14) du conduit sous pression (10) au moyen de la ferrure (18),
**caractérisée par** un étrier de maintien (24, 124, 224, 324, 424, 524), comprenant :
- un premier tronçon (26, 126, 226, 326, 426, 526) au moyen duquel le conduit sous pression (10) est monté sur le raccord (16) ou sur la pièce tubulaire (14) ; et
- un second tronçon (28, 128, 228, 328, 428, 528) relié de manière rigide au premier tronçon (26, 126, 226, 326, 426, 526), et sur lequel l'étrier de maintien (24, 124, 224, 324, 424, 524) est immobilisé sur le carter (22) au moyen de la ferrure (18) ;
l'étrier de maintien (24, 124, 224, 324, 424, 524) étant immobilisé élastiquement sur son second tronçon (28, 128, 228, 328, 428, 528) entre la ferrure (18) du conduit sous pression (10) et le carter (22), le second tronçon (28, 128, 228, 328, 428, 528) de l'étrier de maintien (24, 124, 224, 324, 424, 524) étant à cet effet réalisé élastiquement.

2. Dispositif de maintien selon la revendication 1, **caractérisé en ce que** le premier tronçon (26, 126, 226, 326, 426) de l'étrier de maintien (24, 124, 224, 324, 424) présente du côté extrémité une fente avec contre-dépouille (60, 160) dans laquelle le raccord (16) ou la pièce tubulaire (14) du conduit sous pression (10) est immobilisé(e) à la manière d'une liaison par encliquetage.

3. Dispositif de maintien selon la revendication 1, **caractérisé en ce que** le premier tronçon (526) de l'étrier de maintien (524) présente du côté extrémité une fente (560) délimitée par des bras (596) pour recevoir une pièce intermédiaire (530) montée sur le raccord (16), qui est immobilisée par coopération de force et de forme sur l'étrier de maintien (524) par flexion plastique des bras (596).

4. Dispositif de maintien selon la revendication 3, **caractérisé en ce que** la pièce intermédiaire (530) présente une section transversale essentiellement en forme de U et est clipsée sur un prolongement (595) du raccord (16).

5. Dispositif de maintien selon l'une ou l'autre des revendications 3 et 4, **caractérisé en ce que** les bras (596) sur le premier tronçon (526) de l'étrier de maintien (524) portent sur les côtés tournés l'un vers l'autre des saillies (597) qui sont enfoncées sous la flexion plastique des bras (596) pour immobiliser la pièce intermédiaire (530) sur l'étrier de maintien (524) dans la pièce intermédiaire (530), se composant de préférence de matière plastique.

6. Dispositif de maintien selon l'une des revendications précédentes, **caractérisé en ce que** le second tronçon (28, 528) de l'étrier de maintien (24, 524) présente une ouverture (76, 576) et se transforme sur son extrémité (70, 570) détournée du premier tronçon (26, 526) en une languette élastique en angle (74, 574) qui possède une autre ouverture (78, 578), la ferrure (18) du conduit sous pression (10) s'étendant à travers les ouvertures (76, 78, 576, 578) en alignement à l'état monté sur le carter (22), de sorte que l'étrier de maintien (24, 524) est encastré élastiquement avec la languette élastique (74, 574) et le second tronçon (28, 528) entre une collerette (42) de la ferrure (18) et le carter (22).

7. Dispositif de maintien selon la revendication 6, **caractérisé en ce que** l'extrémité (580) de la languette élastique (574) tournée vers le premier tronçon (526) de l'étrier de maintien (524) est coudée en direction du second tronçon (528) de l'étrier de maintien (524) et s'appuie sur le second tronçon (528), la languette élastique (574) s'étendant sensiblement parallèlement au second tronçon (528) de l'étrier de maintien (524) dans la zone de l'ouverture (578) réalisée dans la languette élastique (574).

8. Dispositif de maintien selon l'une des revendications 1 à 5, **caractérisé en ce que** le second tronçon (128) de l'étrier de maintien (124) présente une ouverture (176) pour la ferrure (18) du conduit sous pression (10), et **en ce que**, dans la zone de l'ouverture (176), sont prévus des bras élastiques (188) déployés sur le second tronçon (128) de l'étrier de maintien (124), qui, à l'état monté de la ferrure (18) sur le carter (22), enserrent élastiquement l'étrier de maintien (124) entre une collerette (42) de la ferrure (18) et le carter (22).

9. Dispositif de maintien selon l'une des revendications précédentes, **caractérisé en ce que** l'étrier de maintien (24, 124, 224, 324, 424, 524) est assuré à l'encontre d'une rotation par rapport au carter (22), à l'état monté de la ferrure (18) du conduit sous pression (10) sur le carter (22), ce pourquoi le second tronçon de l'étrier de maintien, soit se trouve en assise par coopération de forme dans un évidement correspondant du carter (22), soit possède un trou de positionnement (84, 184) à travers lequel s'étend une goupille (52) immobilisée sur le carter (22), ou bien est pourvu d'un rabat (290, 370, 494, 590), qui s'engage dans un évidement du carter (22).

10. Dispositif de maintien selon l'une des revendications précédentes, **caractérisé en ce que** la pièce tubulaire (14) est arquée et le premier tronçon (26, 126, 226, 326, 426, 526) définit un angle prédéterminé avec le second tronçon (28, 128, 228, 328, 428, 528) de l'étrier de maintien (24, 124, 224, 324, 424, 524), l'étrier de maintien (24) étant muni de préférence d'un profilage (126) pour la rigidification dans la zone de transition (54) entre le premier tronçon (26) et le second tronçon (28).

11. Dispositif de maintien selon l'une des revendications précédentes, **caractérisé en ce que** l'étrier de maintien (24, 124, 224, 324, 424, 524) se compose d'un acier feuillard pour ressorts.
